# FASCICULE DE BREVET EUROPEEN

(11) **EP 2 517 207 B1**
(45) Date de publication et mention de la délivrance du brevet: **04.07.2018**
(21) Numéro de dépôt: 10782544.0
(22) Date de dépôt: 09.11.2010
(51) Int. Cl.: G11B 33/12, G11B 15/675, G11B 17/043

(54) **BOÎTIER DESTINÉ À RECEVOIR UN DISQUE DUR EXTRACTIBLE ET COMPRENANT UNE CAME BASCULANTE POUR EXTRAIRE CE DISQUE DUR**
GEHÄUSE ZUR AUFNAHME EINER EXTRAHIERBAREN FESTPLATTE MIT EINER SCHWENKNOCKE ZUR EXTRAKTION DER FESTPLATTE
CASING FOR RECEIVING AN EXTRACTIBLE HARD DRIVE AND INCLUDING A ROCKING CAM FOR EXTRACTING SAID HARD DRIVE

(30) Priorité: 21.12.2009 FR 0906196
(43) Date de publication de la demande: 31.10.2012
(73) Titulaire: SAGEMCOM BROADBAND SAS, 92500 Rueil Malmaison (FR)
(72) Inventeur: HERGAULT, Stéphane, F-92500 Rueil-Malmaison (FR); SONJON, Grégory, F-92500 Rueil-Malmaison (FR); SUSINI, Dominique, F-92500 Rueil-Malmaison (FR)
(74) Mandataire: Beaudouin-Lafon, Emmanuel
(86) Numéro de dépôt international: PCT/EP2010/006800
(87) Numéro de publication internationale: WO 2011/076313

(56) Documents cités:
- FR-A1- 2 433 220
- US-A- 4 623 945

## Description

L'invention concerne un boîtier destiné à recevoir un élément extractible tel qu'un disque dur extractible, ce boîtier comportant un logement ouvert sur l'extérieur dans lequel est engagé le disque dur extractible, et un organe mobile actionnable pour extraire partiellement un disque engagé dans ce logement du boîtier afin de permettre à un utilisateur de saisir la partie avant de ce disque dur pour l'extraire complètement.

### ARRIERE PLAN DE L'INVENTION

En pratique, un connecteur électronique interne est situé au fond du logement lorsque l'ensemble est monté par exemple sur un circuit imprimé. Lorsqu'un utilisateur engage un disque dur dans ce boîtier, il exerce une pression sur la partie avant du boîtier pour qu'un connecteur complémentaire situé en partie arrière du disque dur s'engage dans le connecteur interne situé au fond du logement.

Ainsi, une fois que le disque dur est en place dans le boîtier, les connecteurs sont complètement engagés l'un dans l'autre, de sorte que le disque dur extractible est opérationnel et peut donc être pris en charge par le système d'exploitation associé au circuit imprimé du boîtier.

Compte-tenu de l'emboîtement nécessaire des connecteurs lorsque le disque dur est en place, il est nécessaire d'exercer, depuis l'arrière du boîtier et sur le disque dur, un effort de pression permettant de désolidariser les connecteurs l'un de l'autre afin d'initier l'extraction du disque dur.

Cet effort peut être assuré au moyen d'une came montée basculante sur le boîtier et comprenant une extrémité d'éjection venant en appui sur le fond du disque dur lorsque cette came est actionnée. L'effort exercé par l'extrémité d'éjection permet de désolidariser les connecteurs et d'extraire en partie le disque dur pour permettre à l'utilisateur de le saisir par sa partie avant, qui dépasse ainsi de la face avant du boîtier.

En pratique, un tel boîtier, qui a une forme généralement parallélépipédique, est généralement fait d'éléments de tôle qui sont découpés, emboutis, pliés, et solidarisés les uns aux autres, bien qu'il soit possible que certains au moins des composants du boîtier soient à base de matériaux plastiques éventuellement renforcés.

Lors de la conception de tels boîtiers, on prend de plus en plus compte la notion d'ergonomie et de confort d'utilisation. L'utilisateur final, notamment, apprécie de pouvoir être sûr que l'élément extractible est correctement inséré ou encore avoir un ressenti agréable quand il insère ou extrait l'élément extractible.

Le document US 4,623,945 divulgue un dispositif comprenant une tige coulissante et un levier d'éjection ayant les même fonctions que le levier coulissant et que la came basculante de la présente invention.

### OBJET DE L'INVENTION

Le but de l'invention est de proposer un boîtier de ce type dont l'interface avec l'utilisateur est améliorée.

### RESUME DE L'INVENTION

L'invention a pour objet un boîtier comportant un logement pour recevoir un élément extractible et un organe d'extraction monté au voisinage du logement selon la revendication 1.

La came est avantageusement conçue de façon à permettre d'éjecter l'élément extractible et en accompagner l'insertion par basculement autour de sa portion centrale.

La première extrémité du levier forme avantageusement poussoir et débouche en face avant du corps de boîtier. L'extrémité d'actionnement du levier permet de faire basculer la came, par enfoncement de l'extrémité formant poussoir lors de l'éjection de l'élément extractible.

Avec la présence de ce décrochement qui coopère avec des moyens de rappel élastique, l'opération d'insertion de l'élément extractible gagne en confort d'utilisation. En effet, quand l'utilisateur insère l'élément extractible dans le boîtier, il ressent, en fin de course de l'élément, que le levier « tombe » dans le décrochement prévu sur la came. Ce ressenti est acoustique, le levier percutant le fond du décrochement en produisant un bruit perceptible, notamment quand les deux pièces sont en métal. Mais il peut aussi être complété ou substitué par un ressenti tactile, car le levier, en étant poussé vers le décrochement de la came grâce aux moyens de rappel élastique, peut entraîner aussi une vibration qui se propage dans le levier et le boîtier et que l'utilisateur ressent. L'utilisateur sait ainsi qu'il a inséré correctement le disque.

Les moyens de rappel élastique comprennent, par exemple, un ressort de rappel dont une extrémité est liée à la portion d'extrémité d'actionnement de la came qui traverse l'encoche du levier, et dont l'autre extrémité est liée à la deuxième extrémité du levier au-delà et à distance de l'encoche dudit levier. Il est ainsi actif en traction lors de l'insertion de l'élément extractible.

Lors de l'enfoncement de l'extrémité formant poussoir, le ressort se tend, la came bascule, et le levier s'échappe du décrochement de la came.

Quand l'utilisateur insère un élément extractible dans le boîtier, ce ressort de rappel permet en effet de transmettre un couple à la came, ce qui engendre pour l'utilisateur une sensation de résistance: il exerce alors, en effet, une force sur la came via la face arrière de l'élément extractible qu'il pousse dans le boîtier, force antagoniste à celle exercée par le ressort de rappel sur la came. Et quand l'utilisateur pousse le poussoir à l'extrémité du levier afin d'éjecter l'élément extractible, ce ressort de rappel permet cette fois de transmettre un couple au levier, ce qui facilite le mouvement de basculement de la came venant éjecter l'élément, venant ainsi aider l'utilisateur.

De préférence encore, le corps de boîtier peut comprendre un élément en saillie contre lequel le levier vient en butée lors du basculement de la came vers un état d'insertion de l'élément extractible. Quand le levier vient le percuter, il se produit un bruit, qui s'additionne à celui provoqué par le levier venant se caler dans le décrochement de la came afin d'obtenir un bruit plus perceptible et/ou de provoquer davantage de vibrations dans le boîtier, vibrations que l'utilisateur percevra tactilement. Le boîtier forme alors une caisse de résonance.

L'élément en saillie du corps de boîtier peut être, par exemple, une protubérance faisant partie intégrante du corps du boîtier, ou être un élément de montage du boîtier du type vis insérée dans un fût de vissage présent dans le corps de boîtier.

Selon une variante, le levier présente une symétrie par rapport à un plan longitudinal, ce qui lui permet d'être monté indifféremment le long d'un bord latéral du corps de boîtier ou le long de son bord opposé. On peut ainsi prévoir que le levier ait deux encoches, dont une seule est utilisée selon le côté de boîtier le long duquel il est monté. On peut aussi proposer une forme de levier avec une encoche unique, mais présentant une extrémité faisant fonction de poussoir qui soit, par exemple, en forme de T. Cette symétrie dans la géométrie du levier est une caractéristique intéressante, car elle permet d'adapter la position du poussoir du levier selon différentes contraintes de style, d'ergonomie ou autres. Dans cette optique, il est intéressant que le corps de boîtier puisse comporte des éléments de guidage du levier permettant de monter ce levier coulissant soit le long d'une face latérale de ce levier, soit le long d'une autre face latérale (notamment opposée à la précédente) de ce corps de boîtier. On n'a ainsi qu'un seul type de boîtier à fabriquer, que l'on vient ensuite adapter en phase finale de fabrication en positionnant le levier sur l'un ou l'autre des côtés de celui-ci.

Par ailleurs, on peut prévoir avantageusement que le corps de boîtier comporte en partie arrière de sa face supérieure une patte incluant une embase prolongée par une languette qui est orientée parallèlement à cette face supérieure tout en étant espacée de cette face supérieure ainsi qu'un ergot dépassant de la face supérieure en étant situé en vis-à-vis d'une extrémité libre de cette languette. La came basculante est alors solidarisée au corps de boîtier par encliquetage en ayant sa portion centrale engagée entre la languette et la face supérieure du corps de boîtier d'une part et entre l'ergot et l'embase d'autre part.

Avec ce système de montage de la came, il n'est pas nécessaire de prévoir un axe fixe rigidement solidaire du corps de boîtier. Ce corps de boîtier peut être fabriqué en matière plastique moulée de manière à comporter la patte et l'ergot en partie arrière de sa face supérieure. Il peut également être fabriqué en tôle découpée et emboutie, la patte étant alors formée par une prédécoupe en U qui est ensuite emboutie pour s'étendre parallèlement à la face supérieure du boîtier tout en étant espacée de celle-ci, l'ergot étant alors obtenu de manière analogue. L'ergot peut comporter une face orientée en direction opposée à l'extrémité libre de la languette et inclinée par rapport à la face supérieure du corps de boîtier pour constituer une rampe facilitant l'engagement de la came entre la languette et la face supérieure.

Selon un mode de réalisation particulier, le boîtier comporte un bouton poussoir monté dans une enceinte ménagée dans le boîtier pour coulisser entre une position de repos et une position d'enfoncement du levier de telle manière que le levier tape le bouton poussoir lorsque l'extrémité arrière de l'encoche tombe dans le décrochement.

### BREVE DESCRIPTION DES FIGURES

D'autres caractéristiques et avantages de l'invention apparaîtront plus clairement à la lumière de la description qui va suivre et des dessins annexés, concernant un mode de réalisation non limitatif de l'invention, concernant un boîtier pour disque dur extractible.

Il sera fait référence aux figures des dessins annexés, où :
- Les figures la, 1b sont des vues schématiques, respectivement de dessus et en perspective, montrant la face inférieure du corps du boîtier selon l'invention, équipée de la came et du levier permettant l'insertion et l'éjection du disque dur amovible ;
- la figure 2 est une portion agrandie de la figure 1 dans la zone de liaison entre la came et le levier, la came étant en cours de basculement correspondant à un état d'éjection du disque dur amovible ;
- la figure 3 est la même vue que la figure 2, la came étant cette fois en position correspondant à un état inséré du disque dur amovible dans le boîtier ;
- la figure 4 est une vue en perspective du corps du boîtier, où la came est en cours de basculement correspondant à un état d'éjection du disque dur amovible comme à la figure 2 ;
- la figure 5 est la même vue en perspective que la figure 4, la came étant cette fois en position correspondant à un état inséré du disque dur amovible dans le boîtier comme à la figure 3.

### DESCRIPTION DETAILLEE DE L'INVENTION

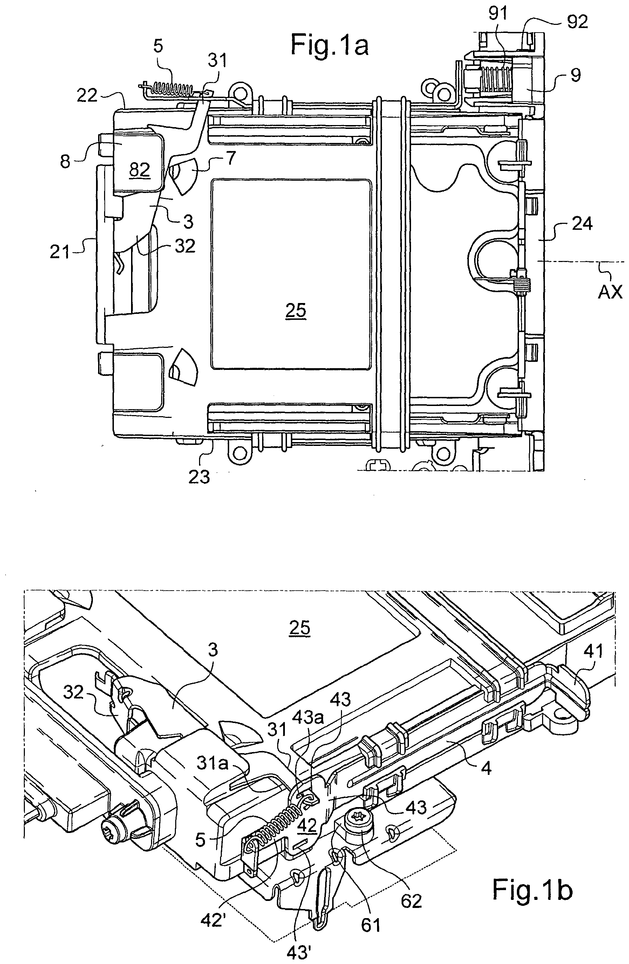

Les figures 1a,1b représentent un boîtier 1 de l'invention comportant un corps 2 de boîtier en matière plastique issu de moulage qui est équipé d'une came basculante 3 et d'un levier d'actionnement 4.

Les mêmes composants gardent la même référence d'une figure à l'autre.

Le corps de boîtier 2, qui a une forme généralement parallélépipédique, comprend une face ou paroi supérieure ajourée (non représentée afin de permettre de visualiser les composants internes au boîtier), une face ou paroi inférieure 25 également ajourée, deux faces ou parois latérales 22,23 droite et gauche, ainsi qu'une face avant 21 qui présente une fente d'insertion d'un élément extractible (non représenté), qui est ici un disque dur extractible, et une face ou paroi arrière 24.

L'insertion de ce disque dur, qui a lui aussi une forme généralement parallélépipédique, dans le boîtier 1, consiste ainsi à le placer en vis-à-vis de la fente d'insertion de la face avant 21 du corps de boîtier 2, et à le faire coulisser dans le boîtier 1 selon la direction longitudinale AX de ce boîtier, jusqu'à ce qu'il vienne en appui contre la paroi arrière 24 du corps de boîtier.

Concrètement, un connecteur électronique, non représenté aux figures, comprenant des branches orientées selon la direction AX (figure 1b) est situé au niveau de la paroi arrière 24, pour recevoir les broches d'un connecteur correspondant équipant le disque dur extractible lorsque celui-ci est complètement inséré dans le boîtier 1.

En pratique, l'engagement des broches du connecteur du disque dur dans les broches correspondantes situées au niveau de la paroi arrière 24 est en soi suffisant pour considérer qu'il assure le blocage de ce disque dur dans le boîtier. L'extraction du disque dur est assurée en exerçant à la face arrière du disque dur extractible un effort de poussée orienté selon la direction AX vers la face avant 21.

Cet effort de poussée est exercé par la came basculante 3 qui est située en partie arrière du boîtier 1 et qui comprend une extrémité d'éjection 32 venant en appui sur la face arrière 24 du disque dur extractible lorsque cette came 3 bascule.

Cette came basculante 3, qui est fabriquée ici en tôle découpée, a une forme générale de bras ou analogue, et présente une extrémité d'actionnement 31 ayant une forme de pointe par laquelle elle peut être actionnée pour basculer, et l'extrémité d'éjection 32 mentionnée plus haut, par laquelle elle exerce une poussée sur le disque dur extractible afin de l'éjecter lorsqu'elle bascule.

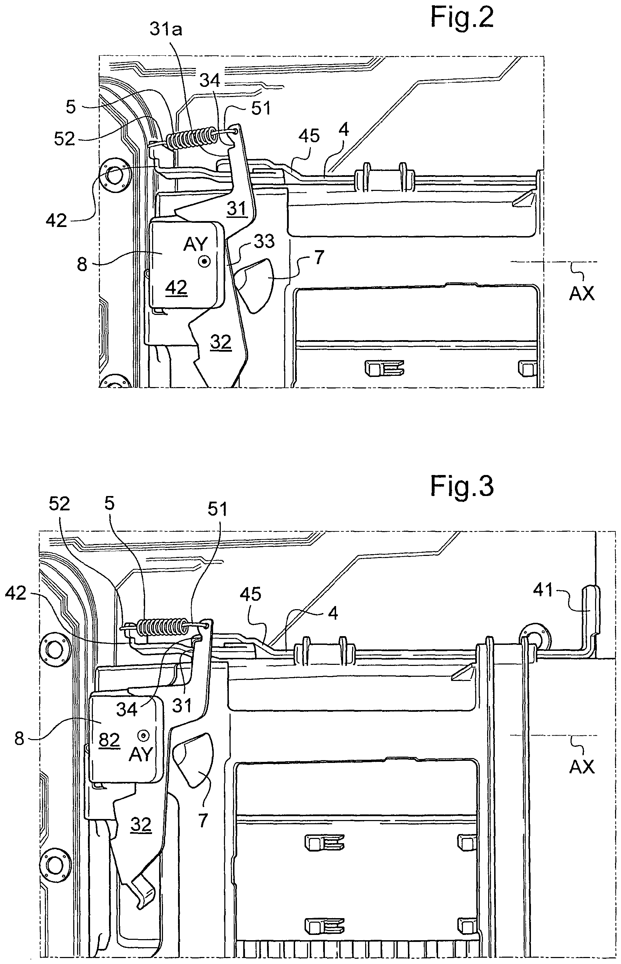

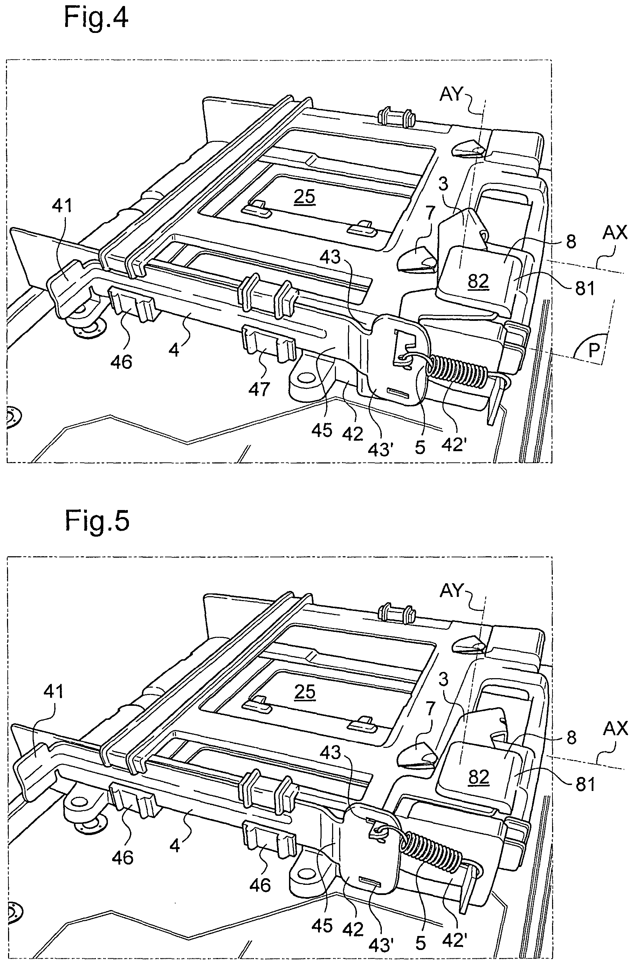

Cette came 3 comprend une portion centrale 33 située entre ses extrémités 31 et 32, et autour de laquelle la came bascule entre une position de repos, quand le disque dur est inséré (comme représenté aux figures 3 et 5) et une position basculée, quand le disque dur est éjecté (comme représenté aux figures 2 et 4). Dans les figures 2 à 5 , on a représenté symboliquement un axe AY qui s'étend perpendiculairement à la face supérieure du corps de boîtier 2 en étant situé au niveau de la portion centrale 33 de la came 3, et autour duquel cette came pivote lorsqu'elle est actionnée.

Cette came 3 est solidarisée au corps de boîtier 2 grâce à une patte 8 et à un ergot 7, tout en étant apte à pivoter par rapport à celui-ci. La patte 8 comprend une embase 81 qui s'étend perpendiculairement à la face supérieure, dans le prolongement de la paroi arrière 24, et elle est elle-même prolongée par une languette 82 généralement plane. Cette languette 82 s'étend parallèlement à la face supérieure tout en étant espacée de cette face d'une distance correspondant sensiblement à l'épaisseur de la tôle constituant la came 3 dans la portion centrale 31.

L'ergot 7 dépasse quant à lui de la face supérieure tout en étant situé en vis-à-vis de l'extrémité libre de la languette 82. Il a une hauteur qui correspond sensiblement à la distance séparant la languette 82 de la face supérieure, et il est espacé de l'extrémité libre de cette languette 82.

L'assemblage de la came 3 à la partie arrière du corps de boîtier 2 est assuré simplement par encliquetage. Le bord de la portion centrale 31 de la came 3 est alors engagé entre l'extrémité libre de la languette 82 et la face supérieure du corps du boîtier 2, cette portion centrale 33 ayant alors sa face inférieure en appui sur l'extrémité libre de l'ergot 7. Un effort est alors exercé sur la came 3 selon la direction AX, pour rapprocher la portion centrale 33 de la came 3 de l'embase 81 de la patte 8.

Sous l'effet de cet effort d'encliquetage appliqué à la came 3, la languette 82 fléchit pour s'ouvrir en s'écartant de la face supérieure, ce qui permet à la came d'avancer vers l'embase 81 tout en ayant sa face inférieure en appui sur l'ergot 7. A la fin de ce déplacement, la portion centrale 33 de la came vient se loger en appui sur la face supérieure lorsque le bord opposé de cette portion centrale 33 arrive au niveau de l'ergot 7 et qu'il glisse le long de cet ergot vers la face supérieure sous l'effet des efforts de flexion appliqués par la languette 82 à cette portion centrale 33.

A ce stade, la came 3 est complètement encliquetée dans son logement, c'est-à-dire que son montage est sensiblement terminé : elle est en appui par sa face inférieure sur la face supérieure du corps de boîtier, et la face inférieure de la languette 82 est en appui sur la face supérieure de cette came.

Complémentairement, la came 3 est aussi bloquée longitudinalement, c'est-à-dire selon la direction AX, d'une part par l'embase 81 de la patte 8 qui constitue une butée à l'encontre du bord de la portion centrale 33 de cette came 3, et d'autre part par l'ergot 7 qui constitue une butée à l'encontre du bord opposé de cette portion centrale 33.

La came 3 a ainsi sa portion centrale 33 qui est maintenue parallèle à la face supérieure du boîtier 1, et elle est apte à pivoter autour de sa portion centrale 17. L'extrémité d'éjection 32 de cette came 3 est une partie qui est repliée par rapport à la portion centrale 33, et qui est engagée dans un évidement s'étendant en partie centrale de la paroi arrière 24 et de la partie arrière de la face supérieure du corps de boîtier 2. Cet évidement présente des dimensions supérieures à celles de l'extrémité d'éjection 32 pour lui offrir la mobilité lui permettant de venir en appui sur la face arrière d'un disque dur extractible engagé dans le boîtier 1.

L'éjection du disque dur est obtenue en exerçant sur l'extrémité d'actionnement 31 de cette came 3 un effort selon l'axe AX et en direction de la face arrière 24, pour faire basculer la came 3 et exercer de la sorte un effort sur la face arrière du disque extractible via l'extrémité d'éjection 31 et en direction de la face avant 21.

L'extrémité d'actionnement 31 de la came est déplacée au moyen du levier 4 qui est monté coulissant le long de la paroi latérale 22, et qui comporte une extrémité d'actionnement 42 située au niveau de l'extrémité d'actionnement 31 de la came 3 et une extrémité opposée 41 formant bouton poussoir qui est située à proximité de la face avant 21 de ce boîtier 1.

Ce levier 4 est constitué d'une tôle généralement rectangulaire découpée et emboutie ou pliée, il coulisse le long de la paroi latérale 22 du boîtier 1 en étant orienté parallèlement à l'axe AX. Ce levier 4 formant coulisseau est solidarisé au corps 2 de boîtier par deux pattes supérieures recourbées 44,45 qui enserrent son bord supérieur, et par deux pattes inférieures recourbées 46,47 qui enserrent ses bords supérieur et inférieur à la manière de mâchoires de manière à plaquer l'ensemble du levier 4 contre la face externe de cette paroi latérale 22.

Comme représenté plus particulièrement aux figures 4 et 5, l'extrémité d'actionnement 42 de ce levier 4 comprend deux encoches, une encoche supérieure 43 et une encoche inférieure 43'. Lorsque le levier 4 est monté sur la paroi latérale 22, l'extrémité d'actionnement 31 de la came 3 est engagée dans l'encoche supérieure 43, de manière à être cinématiquement liée à ce levier. Naturellement, quand on veut monter le levier sur la paroi latérale opposée 23 du boîtier 1, on retourne ce dernier, qui présente une symétrie par rapport à un plan longitudinal P (figure 4), et on engage alors la came modifiée de façon appropriée dans l'encoche 43', qui devient l'encoche supérieure dans cette configuration.

Par ailleurs, la came 3 présente un décrochement 34 visible plus particulièrement aux figures 2 et 3, au niveau de son extrémité d'actionnement 31 : en position de repos (figure 3), la zone du levier 4 comprenant l'encoche 43 se trouve calée dans ce décrochement 34, et en position d'éjection (figures 1b et 4) ce décrochement 34 se trouve décalé dans la partie d'actionnement 31 de la came 3 qui traverse l'encoche 43 du levier 4.

L'ensemble des figures représente, en outre, un ressort de rappel 5 dont une extrémité 51 est liée à la portion d'extrémité d'actionnement 31 de la came qui traverse l'encoche 43 quelle que soit la position - de repos ou d'éjection - de la came 3, et dont l'autre extrémité est liée à l'extrémité d'actionnement 42 du levier 4, dans une portion 42' qui s'étend au-delà de l'encoche 34, et à distance suffisante de celle-ci pour que le ressort 5 puisse être monté et tendu correctement entre le levier 4 et la came 3. On voit des figures 3 et 5 que le ressort 5 est tendu quand la came 3 est en repos, et des figures 2 et 4 qu'il est moins tendu quand la came 3 est en position d'éjection.

Enfin, comme représenté à la figure 1b, le corps de boîtier 2 comprend sur sa paroi inférieure un fût de vissage dans lequel une vis 62 est destinée à être vissée à travers la paroi supérieure du boîtier 1 afin d'en assurer la fixation au reste du boîtier. Cette vis métallique 62 est disposée de façon à ce que le levier 4, à proximité de son extrémité d'actionnement 42, vienne toucher cette vis 62 quand il coulisse vers la face avant 21 du boîtier, lors de l'insertion du disque dur. Cela est rendu possible par le profil du levier 4, qui présente un flanc incliné 45 reliant la portion médiane du levier 4 à son extrémité d'actionnement 42, flanc qui va percuter la vis 62. Alternativement à la vis, on peut concevoir le boîtier pour qu'il présente une saillie 61, qui jouera le même rôle que la vis vis-à-vis du flanc 45 du levier 4.

En pratique, quand l'utilisateur insère le disque dur par la fente avant du boîtier 2, le disque dur repousse l'extrémité d'éjection 32 de la came 3, entraînant l'extrémité 42 du levier dans un mouvement vers la face avant 21 du boîtier. Lors de ce mouvement relatif entre came et levier, le ressort 5 vient tirer le levier 4 dans le décrochement 34 de la came : le bord arrière de la came 31a est, grâce au ressort 5, maintenu continuellement contre l'extrémité arrière 43a de l'encoche 43 du levier , jusqu'à ce qu'il « tombe » dans le décrochement 34, ce qui crée un petit bruit caractéristique indiquant à l'utilisateur qu'il a inséré correctement le disque dur (figures 3 et 5). Ce bruit est renforcé par celui provoqué par le fait, que, simultanément, le flanc 45 du levier 4 vient percuter la vis 62.

A noter également la présence d'un bouton 9 monté dans une enceinte 92 du corps de boîtier 2 pour coulisser entre une position enfoncée d'extraction et une position en butée affleurant la surface externe du boîtier (position représentée sur la figure la). Le bouton 9 est associé à un ressort de rappel 91 monté entre le fond de l'enceinte 92 et la tête du bouton 9 pour rappeler le bouton 9 dans sa position en butée. En position enfoncée, le bouton 9 a une portion qui traverse le fond de l'enceinte 92 et repousse le levier pour basculer la came en position d'extraction. A la fin de l'insertion, lorsque la came bascule dans l'autre sens et repousse le levier et que l'extrémité arrière de l'encoche tombe dans le décrochement, le poussoir 41 vient percuter le bouton 9 dans sa position en butée, ce qui vient amplifier le bruit par effet de résonance.

Quand l'utilisateur éjecte le disque dur, il exerce un effort sur l'extrémité 41 du levier 4 formant poussoir, ce qui enfonce ce levier 4 vers la paroi arrière 24 du boîtier 2, entraînant le basculement de la came 3 vers une position représentée aux figures 2 et 4 : le levier passe « au dessus » du décrochement 34 de la came 3, et le ressort de rappel 5 se tend en transmettant cette fois un couple du levier 4 vers la came 3, facilitant ainsi l'éjection du disque dur en facilitant le mouvement d'éjection de la came 3.

Complémentairement, un autre ressort de rappel non représenté et optionnel peut être prévu : il tend continuellement à ramener le levier 4 vers sa position de repos, qui correspond à celle qu'il occupe dans les figures 3 et 5, et pour laquelle la came 3 n'est pas basculée.

## Revendications

1. Boîtier (1) comportant un logement pour recevoir un élément extractible et un organe d'extraction monté au voisinage du logement, dans lequel l'organe d'extraction comprend une came basculante (3) ayant une extrémité d'appui (32) s'étendant dans le logement et une extrémité d'actionnement (31) coopérant avec un levier (4) coulissant comportant une première extrémité (41), de manoeuvre, et une deuxième extrémité (42) munie d'une encoche (43) traversée par l'extrémité d'actionnement (31) de la came (3), l'extrémité d'actionnement (31) de la came basculante (3) comportant un bord arrière (31a) muni d'un décrochement (34) et des moyens de rappel élastique (5) maintenant ledit bord arrière en appui sur une extrémité arrière (43a) de l'encoche de façon à ce que l'extrémité arrière de l'encoche tombe dans le décrochement à la fin de l'insertion de l'élément extractible en émettant un son, les moyens de rappel élastique comprenant une extrémité (51) liée à la portion d'extrémité d'actionnement (31) de la came (3), et une autre extrémité qui est liée à la deuxième extrémité (42) du levier (4) au-delà et à distance de l'encoche (43) dudit levier (4).

2. Boîtier (1) selon la revendication précédente, **caractérisé en ce que** les moyens de rappel élastique comprennent un ressort de rappel.

3. Boîtier (1) selon l'une des revendications précédentes, comprenant un élément en saillie (61,62) contre lequel le levier (4) vient en butée lors du basculement de la came (3) vers un état d'insertion de l'élément extractible (3).

4. Boîtier (1) selon la revendication précédente, **caractérisé en ce que** l'élément en saillie du boîtier (2) est une protubérance (61) faisant partie intégrante dudit boîtier, ou est un élément de montage du boîtier (62) du type vis insérée dans un fût de vissage présent dans le boîtier (2).

5. Boîtier (1) selon l'une des revendications précédentes, **caractérisé en ce que** le levier (4) présente une symétrie par rapport à un plan longitudinal (P) .

6. Boîtier (1) selon l'une des revendications précédentes, comportant en partie arrière de sa face supérieure une patte incluant une embase prolongée par une languette qui est orientée parallèlement à cette face supérieure tout en étant espacée de cette face supérieure ainsi qu'un ergot dépassant de la face supérieure en étant situé en vis-à-vis d'une extrémité libre de cette languette, la came basculante (3) étant solidarisée au boîtier (2) par encliquetage en ayant sa portion centrale engagée entre la languette et la face supérieure du boîtier (2) d'une part et entre l'ergot et l'embase d'autre part.

7. Boîtier selon l'une des revendications précédentes, comportant des éléments de guidage (46,47) d'un levier (4) permettant de monter ce levier (4) coulissant soit le long d'un côté du logement, soit le long d'un autre côté de ce logement.

8. Boîtier selon la revendication 1, comportant un bouton poussoir monté dans une enceinte ménagée dans le boîtier pour coulisser entre une position de repos et une position d'enfoncement du levier de telle manière que le levier tape le bouton poussoir lorsque l'extrémité arrière de l'encoche tombe dans le décrochement.

## Patentansprüche

1. Gehäuse (1), umfassend eine Aufnahme zum Aufnehmen eines extrahierbaren Elements und ein Extraktionsorgan, das nahe der Aufnahme angebracht ist, wobei das Extraktionsorgan einen Schwenknocken (3) umfasst, der ein Anlageende (32) hat, das sich in die Aufnahme erstreckt, sowie ein Betätigungsende (31), das mit einem Schiebehebel (4) zusammenwirkt, der ein betätigbares erstes Ende (41) und ein zweites Ende (42) hat, das mit einem Schlitz (43) versehen ist, der von dem Betätigungsende (31) des Nockens (3) durchsetzt ist, wobei das Betätigungsende (31) des Schwenknockens (3) einen hinteren Rand (31a) hat, der mit einer Vertiefung (34) versehen ist, sowie elastische Rückstellmittel (5), die den hinteren Rand derart in Anlage an einem hinteren Ende (43a) des Schlitzes halten, dass am Ende des Einfügens des extrahierbaren Elements das hintere Ende des Schlitzes in die Vertiefung fällt und dabei einen Ton abgibt, wobei die elastischen Rückstellmittel ein Ende (51) umfassen, das mit dem Betätigungsendabschnitt (31) des Nockens (3) verbunden ist, sowie ein anderes Ende, das mit dem zweiten Ende (42) des Hebels (4) jenseits des Schlitzes und mit Abstand zum Schlitz (43) des Hebels (4) verbunden ist.

2. Gehäuse (1) nach dem vorhergehenden Anspruch, **dadurch gekennzeichnet, dass** die elastischen Rückstellmittel eine Rückstellfeder umfassen.

3. Gehäuse (1) nach einem der vorhergehenden Ansprüche, umfassend ein vorstehendes Element (61, 62), an dem der Hebel (4) beim Verschwenken des Nockens (3) in Richtung eines Einfügezustandes des extrahierbaren Elements (3) zur Anlage kommt.

4. Gehäuse (1) nach dem vorhergehenden Anspruch, **dadurch gekennzeichnet, dass** das vorstehende Element des Gehäuses (2) ein Vorsprung (61) ist, der ein integraler Bestandteil des Gehäuses ist, oder ein Gehäusemontageelement (62) der Art Schraube ist, die in einen in dem Gehäuse (2) vorhandenen Schraubschaft eingefügt ist.

5. Gehäuse (1) nach einem der vorhergehenden Ansprüche, **dadurch gekennzeichnet, dass** der Hebel (4) in Bezug auf eine Längsebene (P) eine Symmetrie aufweist.

6. Gehäuse (1) nach einem der vorhergehenden Ansprüche, umfassend im hinteren Teil seiner Oberfläche eine Lasche, die eine Basis einschließt, die von einer Zunge verlängert ist, die parallel zu dieser Oberfläche ausgerichtet und dabei zu dieser Oberfläche beabstandet ist, sowie eine Nase, die über die Oberfläche hinausragt und sich dabei gegenüber einem freien Ende dieser Zunge befindet, wobei der Schwenknocken (3) mit dem Gehäuse (2) durch Einrasten verbunden ist, indem sein zentraler Abschnitt zwischen der Zunge und der Oberseite des Gehäuses (2) einerseits und zwischen der Nase und der Basis andererseits eingefügt ist.

7. Gehäuse nach einem der vorhergehenden Ansprüche, umfassend Führungselemente (46, 47) zum Führen eines Hebels (4), die ermöglichen, dass dieser Hebel verschiebbar längs einer Seite der Aufnahme oder längs einer anderen Seite dieser Aufnahme gelagert ist.

8. Gehäuse nach Anspruch 1, umfassend einen Druckknopf, der in einer in dem Gehäuse ausgebildeten Einfassung verschiebbar zwischen einer Ruheposition und einer eingedrückten Position des Hebels derart gelagert ist, dass der Hebel den Druckknopf antippt, wenn das hintere Ende des Schlitzes in die Vertiefung fällt.

## Claims

1. A casing including a housing for receiving an extractable element and an extractor member mounted in the vicinity of the housing, wherein the extractor member comprises a tilting cam having a bearing end extending into the housing and an actuation end co-operating with a slidable lever having a drivable first end and a second end provided with a recess having the actuation end of the cam passing therethrough, the actuation end of the tilting cam including a rear edge provided with an indentation and resilient return means holding said rear edge pressed against a rear end of the recess so that the rear end of the recess drops into the indentation at the end of insertion of the extractable element, thereby emitting a sound, the resilient return means comprise one end linked to the actuation end portion of the cam that passes through the recess in the lever, and the other end linked to the second end of the lever beyond and at a distance from the recess in said lever.

2. The casing according to the preceding claim, wherein the resilient return means comprise a return spring.

3. The casing according to one of the preceding claims, including a projecting element against which the lever (4) comes into abutment while the cam is tilting towards an extractable element inserted state.

4. The casing according to the preceding claim, wherein the projecting element of the casing is a projection (61) forming an integral portion of said casing, or is a casing assembly element of the type comprising a screw inserted in a screw-receiving socket present in the casing.

5. The casing according to one of the preceding claims, wherein the lever presents symmetry about a longitudinal plane (P).

6. The casing according to one of the preceding claims, including a tab at the rear portion of its top face, which tab includes a base extended by a tongue that extends parallel to said top face while being spaced apart from said top face, together with a lug projecting from the top face and situated facing a free end of the tongue, the tilting cam being secured to the casing by snap-fastening, having its central portion engaged both between the tongue and the top face of the casing and also between the lug and the base.

7. The casing according to one of the preceding claims, including guide elements for guiding a lever, enabling the lever to be mounted slidably either along one side of the housing, or along another side of the housing.

8. The casing according to claim 1, including a pushbutton mounted in an enclosure formed in the casing to slide between a rest position and a pushed-in position of the lever in such a manner that the lever strikes against the pushbutton when the rear end of the recess drops into the indentation.
